# EUROPEAN PATENT SPECIFICATION

(11) **EP 3 809 631 B1**
(45) Date of publication and mention of the grant of the patent: **02.02.2022**
(21) Application number: 19382906.6
(22) Date of filing: 16.10.2019
(51) Int. Cl.: H04L 12/24

(54) **METHOD AND SYSTEM FOR CLOUD-NATIVE APPLICATIONS-BASED NETWORK OPERATIONS**
VERFAHREN UND SYSTEM FÜR CLOUD-NATIVE ANWENDUNGSBASIERTE NETZWERKVORGÄNGE
PROCÉDÉ ET SYSTÈME POUR OPÉRATIONS DE RÉSEAU BASÉES SUR DES APPLICATIONS NATIVES EN NUAGE

(43) Date of publication of application: 21.04.2021
(73) Proprietor: Fundació Centre Tecnologic de Telecomunicacions de Catalunya (CTTC), 08860 Castelldefels (ES)
(72) Inventor: VILALTA, Ricard, 08860 Barcelona (ES); MUÑOZ, Raul, 08860 Barcelona (ES); CASELLAS, Ramon, 08860 Barcelona (ES); MARTINEZ, Ricardo, 08860 Barcelona (ES)
(74) Representative: Mohammadian, Dario

(56) References cited:
- US-A1- 2014 317 261
- US-A1- 2019 102 717
- US-B1- 10 212 041
- US-B1- 10 291 462

## Description

### TECHNICAL FIELD

The present invention relates generally to the field of distributed networking, and in particular, to a novel software-defined application-based network operations system architecture.

### BACKGROUND OF THE INVENTION

The Applications-Based Network Operations, ABNO, framework has been standardized by the IETF and it is based on standard protocols and components to efficiently provide a solution to the transport network orchestration. Network orchestration refers to the automated arrangement, coordination, and management of computer systems, middleware, and services. It is the coherent coordination of heterogeneous systems, allocating diverse resources and composing functions to offer end-user services. The application of such concepts and associated technologies allows companies to increase the efficiency and flexibility of their IT resources by managing them as logical entities instead of as physical, hardwired units dedicated to a given application or service.

Software Defined Networking, SDN, is a consolidated network architecture paradigm that provides network programmability by separating the control plane logic from the data plane forwarding infrastructure. This decoupling provides novel benefits to network operators, such as CAPEX savings by replacing dedicated hardware network equipment by software-driven network elements and OPEX thanks to faster new service introduction. SDN has been accompanied with new open standard interfaces, such as OpenFlow, which allows to program the forwarding logic in the physical devices from remote, centralized entities generally defined as SDN controllers.

SDN controllers currently are developed as single monolithic and resource-hungry applications, which might be replicated in case of need for resiliency, or scaling purposes. This leads to non-efficient use of the networks and does not provide scaling mechanisms for high loads of connectivity service requests. Latest solutions suggested by some network vendors is to off-load complexity towards applications run locally. However, this simply shifts the onus of the high loading problem to the applications, instead of being dealt by the SDN controller. Moreover, current SDN controller architectures cannot deal with millions of connectivity service requests per second, as its architecture is not designed for being run in the cloud. Publication US-B-10 291 462 discloses one such distributed system, dealing with problems arising from having a same configuration for central and regional nodes.

Therefore, a need exists to effectively solve the above-mentioned problems.

### SUMMARY

It is therefore an object of the present invention to provide solutions to the above-mentioned problems. The invention is defined in the appended claims. In particular, it is an object of the invention to provide a novel microservices SDN controller, named micro-ABNO. The micro-ABNO is proven to be highly resilient and self-healing, as the microservices are actively monitored and restarted in case of misbehavior. It is also dynamically auto-scalable, allowing load increase grants via the immediate deployment of new instances of necessary microservices. Finally, its ease of integration in a cloud-native solution permits its fast deployment throughout, as well as allowing the integration of cloud-native network software solutions.

Therefore, it is an object of the present invention to provide a microservices software-defined network SDN controller for network control and management.

It is another object of the present invention to provide a method for network control and management by a microservices software-defined network SDN controller.

It is another object of the present invention to provide a computer program comprising instructions, once executed on a processor, for performing the steps of a method for network control and management by a microservices software-defined network SDN controller.

It is another object of the present invention to provide a computer readable medium comprising instructions, once executed on a processor, for performing the steps of a method for network control and management by a microservices software-defined network SDN controller.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means.

For a hardware implementation, the various means may comprise processing units implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (for example, procedures, functions, and so on) that perform the functions described herein. The software codes may be stored in a memory unit and executed by a processor. The memory unit may be implemented within the processor or external to the processor.

Various aspects, configurations and embodiments of the invention are described. In particular the invention provides methods, apparatus, systems, processors, program codes, computer readable media, and other apparatuses and elements that implement various aspects, configurations and features of the invention, as described below.

### BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.
**FIG. 1** depicts a system comprising an SDN controller for micro-ABNO according to one embodiment of the invention.
**FIG.** 2 depicts the method for micro-ABNO by an SDN controller according to another embodiment of the invention.
**FIG.** 3 depicts the connectivity microservice aggregated latency per component in the system comprising an SDN controller for micro-ABNO.
**FIG.** 4 depicts the request duration from the perspective of the NBI microservice.
**FIG.** 5 depicts an example of path computation delay after horizontal scaling, after increasing path computation complexity in order to demonstrate auto-scaling properties.
**FIG. 6** depicts an example of the connectivity service self-healing mechanism, after emulating an error in connectivity microservice.

### DETAILED DESCRIPTION OF THE INVENTION

A software-defined networking controller, or SDN controller, is the application that acts as the control point in the SDN network, managing the flow control to the switches/routers via the so-called southbound APIs and the applications and business logic via northbound APIs to deploy intelligent networks. In the northbound direction, the control plane provides a common abstracted view of the network to higher-level applications and programs using APIs. In the southbound direction, the control plane programs the forwarding behavior of the data plane, using device level APIs of the physical network equipment distributed around the network. The SDN controller is then in charge of managing the network elements (switches, routers, and so on) for data transport.

Microservices are a software development technique that structures an application as a collection of interconnected and related services that are run independently, typically in containers. In a microservices architecture, services are simple and detailed and the protocols are lightweight. For example, gRPC Remote Procedure Calls, RPC, is a protocol designed for cloud native high-performance RPC between micro-services. It uses HTTP/2 as a transport protocol and uses protocol buffers encodings for transported messages. gRPC has been proven as useful in telemetry, due to its low latency and small byte overhead.

Hence, on one hand, the SDN controller executes in at least one virtual machine or in at least one software container (both to be referred to as "*container*" for the rest of the description). On the other hand, the SDN controller is also fragmented into its functional components as individual microservices. Each microservice is capable of being executed in an independent container, either in at least one virtual machine or in at least one software container. All containers composing the SDN controller suite can reside in a single server or be decentralized and distributed throughout a plurality of servers. This decentralization of the SDN controller as microservices in a distributed architecture renders a more efficient micro-ABNO, capable of dynamically handling heavy loads requested from a large number of resource-intensive applications. Each micro-service is oriented to one specific purpose cloud application. The operations performed classically by a single SDN controller are decoupled into small purpose-specific applications, which focus on a simple operation. These micro-services tend to be stateless, but where state is needed, non-relational databases are introduced for consistency.

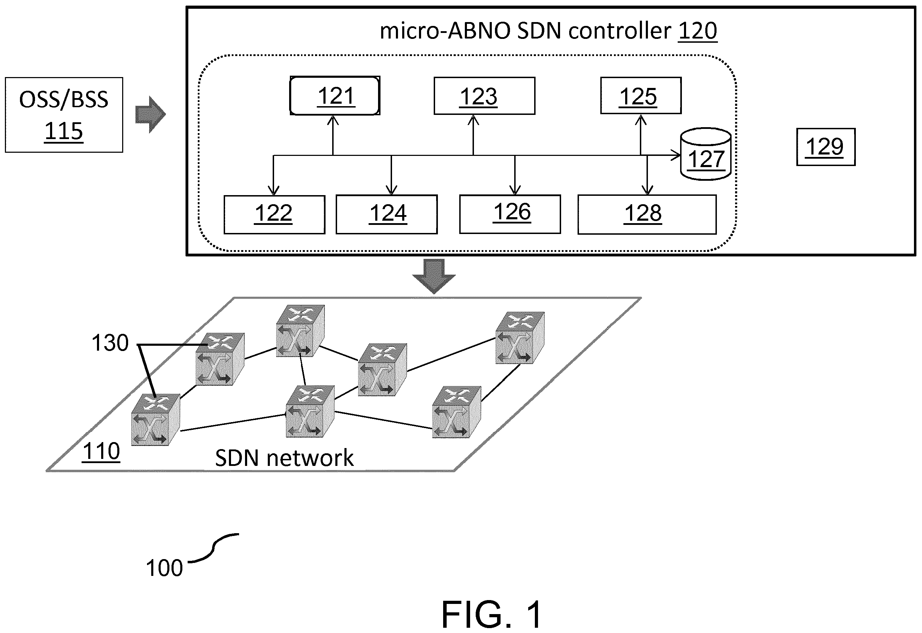

**FIG. 1** refers to a system 100, according to one embodiment of the invention, comprising a micro-ABNO SDN controller 120. An SDN network 110 comprising a plurality of interconnected network elements and its network element controllers 130, is to be actively controlled by SDN controller, or means 120 for SDN controlling. The SDN controller comprises at least one of the following microservices, such as an NBI service 121, a connectivity service 123, a context service 125, a VNTM service 122, a connection service 124, a topology service 126, a path computation service 128, and a database service 127. The SDN controller can be remotely configured and monitored by a network operator and its Operations and Business Support Systems 115 (OSS/BSS). Optionally, the SDN controller can additionally comprise a transceiver service, a monitoring service, or plugin services.

The cloud orchestrator, or means 129 for cloud orchestration, is responsible for coordinating the hardware, so that virtual instances for example, virtual machines or software containers, can be created from the most convenient underlying physical server. It manages a range of virtual IT resources across multiple physical servers, and provides for centralized administration of virtualized resources including creating, storing, backing up, patching and monitoring. It is also in charge of the management of software images, for example, virtual machine images or container images of the cloud applications. Such configuration may also be implemented using software containers instead of virtual machines.

The SDN controller 120, which is responsible for network 110 control and management, receives network intents from the OSS/BSS 115, describing how network should behave and which connectivity requests need to be addressed while properly configuring the underlying network elements. The operator's Operation Support Services and Business Support Services, OSS/BSS, are able to interact with the proposed cloud-native SDN controller, through Standard interfaces, such as ONF Transport API, for the SDN controller to perform its function of network control and management, thus providing the necessary network dynamicity.

The micro-ABNO microservices are classified as three types:
a) gRPC microservices, which use gRPC protocol and protocol buffers as basis for intercommunication. The SDN controller is configured for each microservice to interact with each other using at least one protocol buffer and at least one gRPC interface. The Another gRPC and protocol buffer interface is provided for health check of the micro-service to be monitored by the cloud controller. The usage of gRPC interface and protocol buffers provides lower latency and lower bandwidth usage in micro-service inter-operations;
b) HTTP microservice, which exposes micro-ABNO NorthBound Interface (NBI) (for example, ONF Transport API) as a RESTconf API and translates the request to internal protocol buffers and gRPC interface, allows interoperation with micro-ABNO clients, such as OSS/BSS, while preserving ability to handle a huge number of connectivity requests through multiple replicas of the micro-service and load balancing of the connectivity requests;
c) Database microservice, which provides a scalable cloud native database for storing network element topology, status and configuration, as well as connectivity services requested and connections. In one aspect, this database microservice can be implemented as a non-relational database, such as mongoDB. This database is used to store status of topology, connectivity services, connection services and network elements.

The NBI microservice 121 is responsible for interacting with the network operator's OSS/BSS and translating the connectivity requests into internal protocol buffers and gRPC. The cloud-native database 127 is responsible for storing the context that includes controlled and managed connectivity services, connections and topologies. It interacts with their respective components in order to create, read, update and delete the records.

The connectivity microservice 123 is responsible for managing the lifecycle of connectivity request (creation, update, delete). For creation, first a path computation is requested to fulfil the connectivity service. Once a feasible path is received, it is requested to the Virtual Network Topology Manager. For deletion of a connectivity service, the deletion of the underlying connection(s) is requested. For a connectivity update, a similar procedure to connectivity creation is followed.

The context microservice 125 is responsible for providing the context, which comprises at least one of topological, connectivity, or connection information, through the interaction with a non-relational database 127.

The Virtual Network Topology Manager, VNTM, microservice 122 is responsible for the creation of the necessary connection(s) to fulfil a complete path that completes a connectivity service.

The connection microservice 124 is responsible for interacting with underlying network element controllers (being SDN controllers or network element agents). Specific plugins are tailored for the connection establishment on a particular device type.

The topology microservice 126 is responsible for the registration of underlying network element controllers, retrieve their topologies and maintain an overall topological view. It might be able to request or monitor periodic topological updates.

The path computation microservice 128 is responsible for performing path computation requests and answering with feasible path(s). In order to compute a feasible path, path computation microservice might interact with topology microservice. The path computation microservice might use multiple algorithms, such as a specific one for handling resource allocation competition due to microservice architecture.

In one example implementation of the above-mentioned system, the micro-ABNO architecture can be developed based on python container-based microservices, which use grpc and protocol buffers interfaces to communicate between them. A mongoDB database can be deployed for context storage, including connectivity, connection and topology information. The connection component has several plugins in order to directly control NETCONF-based network elements or interact with REST-based optical SDN controllers. A Kubernetes 1.15 cluster of two nodes using Intel NUC with i7, 32Gb RAM, 1Tb SSD can be deployed on top of an ADRENALINE Testbed Cloud Platform. Istio and Kiali monitoring software can be used to monitor the microservices running on the cluster. A load generator microservice can also be developed in order to stress the proposed architecture and obtain significant results of optical cloud-native SDN controller.

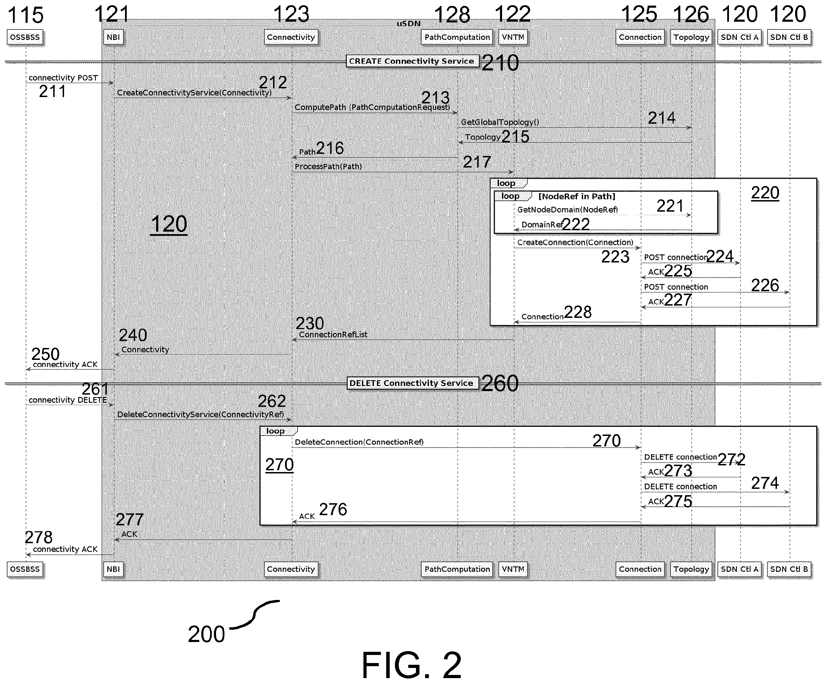

**FIG. 2** depicts the method 200 for micro-ABNO by an SDN controller according to another embodiment of the invention. It is assumed that the topologies have already been registered and recovered by underlying network elements and that a complete multi-domain (from control perspective) topological view is generated.

A first aspect of this embodiment refers to the setting up of a flow, called the CREATE 210 connectivity service. A micro-SDN client, such as OSS/BSS 115, can request 211 connectivity services using an *HTTP POST* request to a certain URL with connectivity service data encoded as a JSON, as defined by standard RESTCONF *ONF Transport API* or *IETF TEAS TE model.* The *NbiService* 121 exports the HTTP service and it is responsible for the conversion of requested connectivity service parameters into protocol buffer message *Connectivity.* The *NbiService* requests 212 to *ConnectivityService* 123 an RPC *CreateConnectivityService* that includes the *Connectivity* message. Once the *CreateConnectivityService* RPC is received, the *ConnectivityService* constructs the message *PathComputationRequest,* which includes the necessary parameters to request a path computation. Once done, an RPC *ComputePath* is sent 213 to *PathComputationService* 128. The *PathComputationService* receives *PathComputationRequest.* In order to compute path between the list of *end_point* included in *PathComputationRequest,* an updated topology is requested 214 to *TopologyService* 126 using RPC *GetGlobalTopology.* The *TopologyService* responds 215 RPC *GetGlobalTopology* with message Topology, which includes an updated complete topological view of the underlying network, described in terms of *Node* and *Link* messages. The *PathComputationService* 128 performs path computation of the requested path in *PathComputationRequest.* The algorithm, that, in one example, could be based on Dijkstra, considers *resourceAllocationUpdatedness* as a node metric to benefit selection of nodes where resources have not been allocated lately. Moreover, once feasible paths are selected, a random selection of possible assigned wavelength, vxlan, or mpls tunnels is performed in order to not collide with other possible allocation. Finally, a message *Path* is generated and responded 216 to *ConnectivityService* 123. Once a *Path* is received at ConnectivityService, it triggers the transmission 217 of an RPC *ProcessPath* to *VntmService.* The RPC includes the *Path* message.

VntmService 122 receives a *ProcessPath* RPC that includes the necessary Path. For each *node* of the path, VntmService requests 221 to TopologyService the node domain using RPC GetNodeDomain. TopologyService responds 222 with the DomainRef message, that refers to the related network element controller. Once all node domains from the *Path* message are identified, the *VntmService* creates a new *Connection* message per domain. If several nodes share the same control domain, they are included in the same *Connection* message. For each generated *Connection* message, *VntmService* requests 223 RPC *CreateConnection* to *ConnectionService* including *Connection* message. For each received RPC *CreateConnection, ConnectionService* processes the Connection by establishing 224 - 227 the necessary connection through a specific Network Element Controller. This element can be a Network Element Agent, or another SDN controller 120. Once the Connection is established, *state* is modified to *INSTALLED*, and *Connection* message is returned 228 to *VntmService.*

Once all INSTALLED Connections have been created, the *VntmService* 128 creates a *ConnectionRefList* messages, with references to all connections and returns 230 it to *ConnectivityService.* When *ConnectivityService* receives a complete *ConnectionRefList*, it updates *Connectivity status* to *INSTALLED* and it returns 240 it to the *NbiService* 121. The *NbiService* converts the received *Connectivity* message to ONF TAPI or IETF TEAS TE JSON encoded message, and returns this encoded message to the application 115.

In other words, once a connectivity CREATE service request is received, the NBI microservice translates this request into the proper protocol buffer and sends the request to connectivity microservice. The connectivity microservice first requests a path computation to *pathcomputation* microservice that requires a topology retrieval. Once a feasible path is computed, virtual network topology manager microservice is responsible for analyzing the need for multi-layer/multi-domain connections and generates the necessary connection requests towards the connection microservice. Multiple replicas of VNTM might parallelize connection(s) creation for multiple connectivity requests. The connection microservice is responsible for requesting the necessary network element configuration (using protocols such as NETCONF, OpenFlow), or interacting with underlying SDN controllers. Each connection microservice replica might focus on serving a specific connectivity service, thus allowing connection processing parallelization.

A second aspect of this embodiment refers to the tearing down of a flow, called DELETE 260 connectivity service. The micro-SDN client (for example, an Operations Support System or a Business Support System OSS/BSS 115) requests the deletion of a Connectivity Service to *NbiService* 121, by sending 261 an HTTP DELETE message to a specific URL that indicates the Connectivity Service reference. The *NbiService* receives the request and it retrieves the *Connectivity uuid*, which is used to create a *ConnectivityRef* message. An RPC *DeleteConnectivityService* is sent 262 to *ConnectivityService* 123 with *ConnectivityRef* message. The *ConnectivityService* retrieves the *ConnectionRef* associated to *ConnectivityRef.* For each *ConnectionRef* message, *ConnectivityService* requests 270 to *ConnectionService* an RPC *DeleteConnection* with *ConnectionRef* message. The *ConnectionService* requests to underlying Network Element Controller the deletion of Connection. Once deleted, the *Connection status* is tagged as *REMOVED* and returned to *ConnectivityService.* When all *ConnectionRef* messages are processed 272-276 by *ConnectivityService*, *Connection* deletion is confirmed 277 to *NbiService,* which responds 278 to micro-SDN client.

In other words, the workflow for removing a connectivity service comprises the NBI receiving a connectivity service DELETE request, which is forwarded to connectivity microservice, which request to connection microservice the deletion of the related connections. Multiple replicas of connection microservice might be instantiated to handle deletion of multiple parallel connectivity services.

Micro-ABNO microservices might benefit from a component of the cloud orchestrator 129 called the horizontal pod autoscaling, HPA, component. A certain amount of CPU and memory resources are requested per microservice. HPA monitors the microservice behavior and notices if resource limit is reached. Then, a new replica is generated and load between replicas is balanced in order to reduce resource utilization. This feature is useful for resource consuming microservices such as path computation.

Another significant benefit from cloud-native orchestration is monitoring the status of the microservices, implementing a self-healing mechanism applying a regular health check (if the service is serving request or not serving). In case of service bad health (which might be caused by some blocking external component or an unexpected microservice behavior), the SDN controller removes the current deployment of the microservice and a new replica is deployed.

Conventional resource allocation mechanisms rely on a first-fit resource allocation solution. However, the inventors have identified that, as path computation is performed concurrently in multiple path computation micro-service replicas, the resource availability used in the path computation becomes outdated, as multiple resource allocation solutions are computed in parallel. Therefore, there is more probability for a collision to occur as conventional mechanisms cannot deal with the specific configuration of a microservices architecture.

In order to minimize collisions, the path computation is implemented via a dual step approach to cater specifically for the implementation of an SDN controller within a microservices architecture. Firstly, the node topological information is extended to consider a new metric, the resource_allocation_updatedness, RAU. The RAU metric indicates the time interval in significant time units from the latest moment resources have been allocated to the node (a node that has no resource allocation has a higher updateness level than another node with constantly allocated resources). The path computation algorithm uses the RAU metric in order to benefit selection of nodes where resources have not been allocated lately by prioritizing those nodes with highest RAU, following, in one example, a classical metric-constraint algorithm, such as Dijkstra. Secondly, once feasible paths are selected, a random selection of possible assigned wavelength, vxlan, or mpls tunnels is performed. This further minimizes the probability of collisions with other possible allocations.

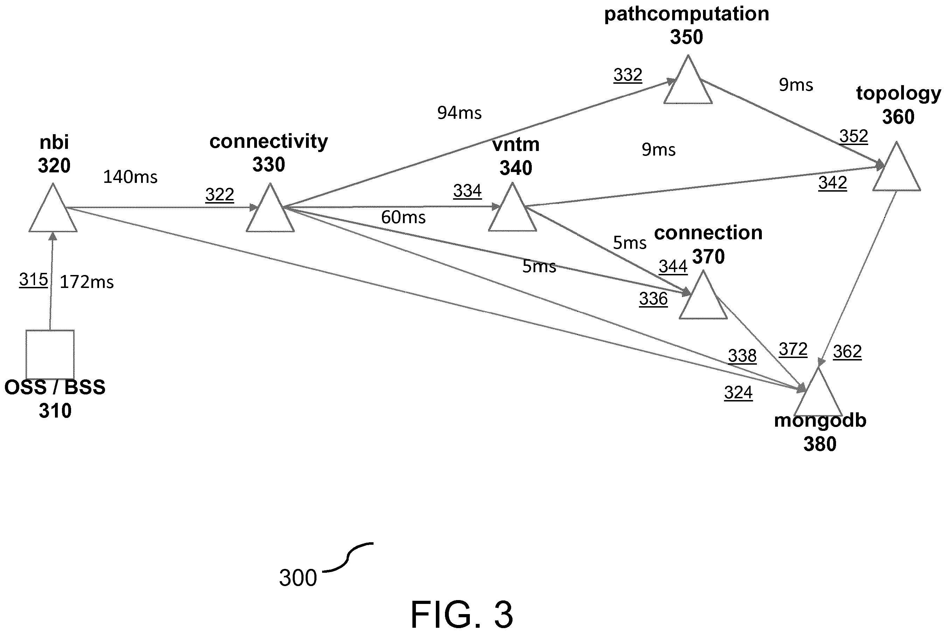

**FIG. 3** shows the relationship between the deployed microservices in one example implementation, and in particular, the connectivity microservice aggregated latency per component. As can be observed, although three types of protocol are introduced (HTTP/gRPC/TCP), the aggregated average latency between components is acceptable.

The example process is triggered by a request from a client 310 (for example, OSS or BSS 115) and processed by the NBI microservice 320, which translates the connectivity requests into internal protocol buffers and gRPC, which are then forwarded to the connectivity microservice 330. The connectivity microservice 330 is configured to communicate with three other microservices, the path computation microservice, the VNTM microservice and the connection microservice. The connectivity microservice 330 requests a path computation, deletion, or update, to path computation microservice 350. The resulting feasible path is then requested to VNTM microservice 340. Both the path computation microservice and the VNTM microservice coordinate with the topology microservice 360 for retrieving the necessary topological information.

The VNTM microservice 340 creates the necessary connection(s) to fulfil a complete path by communicating with the connection microservice 370 which is responsible for interacting with the underlying network element controllers on a per connection basis. Finally, all relevant information is stored in the database microservice 380.

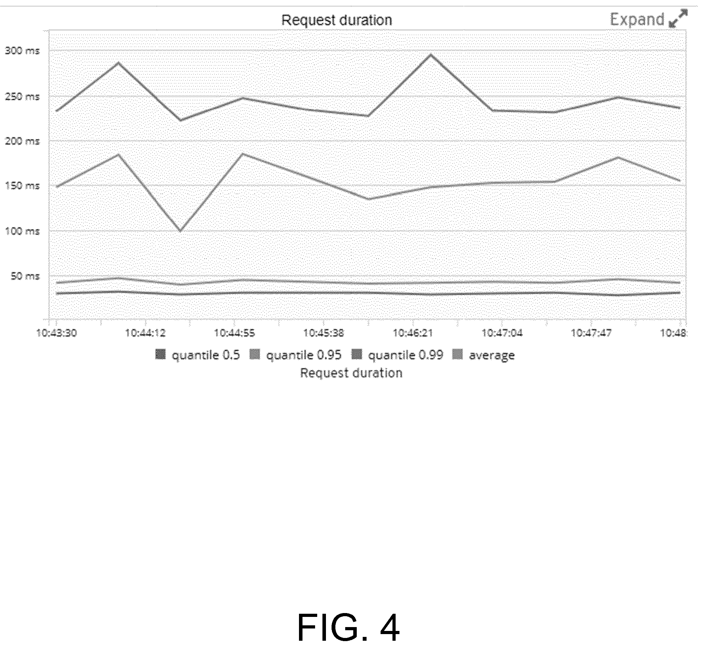

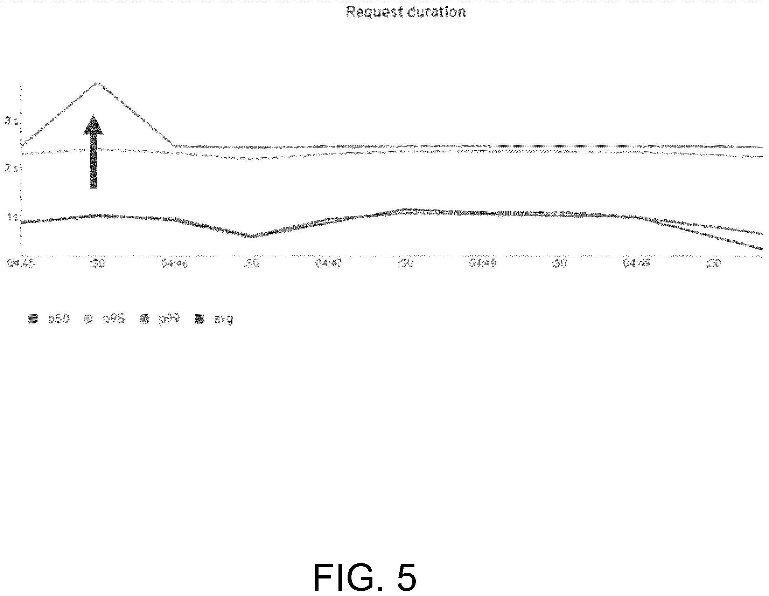

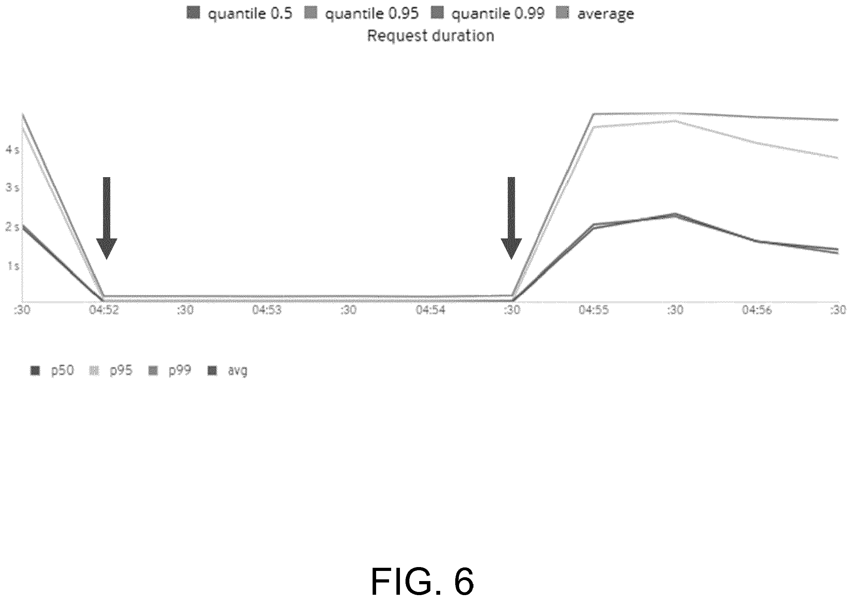

**FIG. 4** shows the request duration from the perspective of the NBI microservice. It can be observed that the request duration varies depending if it is a connectivity service CREATE request or a connectivity service DELETE request. This is due to the inherent complexity of connectivity establishment, where resources need to be allocated and properly configured, while a DELETE request only implies resource configuration. **FIG. 5** is an example of path computation delay after horizontal scaling, after increasing path computation complexity in order to demonstrate auto-scaling properties. Once path computation delay reaches a certain threshold (meaning that more CPU resources are needed), a new replica of path computation microservices is deployed, thus leading to a reduction on path computation delay, as can be seen from the arrow onwards. This is a desired beneficial effect of the proposed architecture, which allows the management of more parallel connectivity service request. **FIG. 6** shows the connectivity service self-healing mechanism, after emulating an error in connectivity microservice. The cloud orchestrator automatically restarts the microservice (second arrow) within the configured timeout (interval between arrows). This is also a beneficial effect of the proposed architecture, which allows microservice health monitoring.

Therefore, the different aspects of the invention described comprise a cloud-native micro-ABNO architecture having several key benefits that introduce network automation: a) self-healing properties, due to the constant monitoring of microservices and restarting of them in case of failure; b) auto-scaling, which allows monitoring microservice resource consumption and scale the microservice horizontally in case of overload (path computation is a resource consuming process which easily scales horizontally); c) load balancing, related to auto-scaling, in the sense that it allows to balance the load between replicated microservices; and d) automated roll-backs, which allow the declarative network status description, benefiting network operators with network programmability. In other words, the proposed micro-ABNO provides a higher degree of flexibility, stability and scalability than current monolithic SDN controllers. The application of cloud-native network control and management will provide network operators with a higher degree of network automation.

Furthermore, it is to be understood that the embodiments, realizations, and aspects described herein may be implemented by various means in hardware, software, firmware, middleware, microcode, or any combination thereof. Various aspects or features described herein may be implemented, on one hand, as a method or process or function, and on the other hand as an apparatus, a device, a system, or computer program accessible from any computer-readable device, carrier, or media. The methods or algorithms described may be embodied directly in hardware, in a software module executed by a processor, or a combination of the two.

The various means may comprise software modules residing in RAM memory, flash memory, ROM memory, EPROM memory, EEPROM memory, registers, hard disk, a removable disk, a CD-ROM, or any other form of storage medium known in the art.

The various means may comprise logical blocks, modules, and circuits may be implemented or performed with a general purpose processor, a digital signal processor (DSP), and application specific integrated circuit (ASIC), a field programmable gate array (FPGA), or other programmable logic device, discrete gate or transistor logic, discrete hardware components, or any combination thereof designed to perform the functions described. A general-purpose processor may be a microprocessor, but in the alternative, the processor may be any conventional processor, controller, microcontroller, or state machine.

The various means may comprise computer-readable media including, but not limited to, magnetic storage devices (for example , hard disk, floppy disk, magnetic strips, etc.), optical disks (for example , compact disk (CD), digital versatile disk (DVD), etc.), smart cards, and flash memory devices (for example , EPROM, card, stick, key drive, etc.). Additionally, various storage media described herein can represent one or more devices and/or other machine-readable media for storing information. The term machine-readable medium can include, without being limited to, various media capable of storing, containing, and/or carrying instruction(s) and/or data. Additionally, a computer program product may include a computer readable medium having one or more instructions or codes operable to cause a computer to perform the functions described herein.

What has been described above includes examples of one or more embodiments. It is, of course, not possible to describe every conceivable combination, or permutation, of components and/or methodologies for purposes of describing the aforementioned embodiments. However, one of ordinary skill in the art will recognize that many further combinations and permutations of various embodiments are possible within the general inventive concept derivable from a direct and objective reading of the present disclosure.

In any case, the invention is defined in the independent claims as appended.

## Claims

1. A microservices software-defined network, SDN, controller (120) for network control and management, the SDN controller comprising a plurality of microservices comprising:
at least one cloud orchestrator (129);
at least one connectivity microservice (123) configured for managing the lifecycle of a connectivity request; and
at least one path computation microservice (128) configured for processing path computation requests comprising receiving path computation requests, computing at least one feasible path, and transmitting a response comprising the at least one feasible path;
wherein the at least one cloud orchestrator is configured for executing each of at least one microservice of the plurality of microservices in an independent container enabling coordinating with the at least one connectivity microservice and the at least one path computation microservice for determining at least one feasible path and for provisioning at least one feasible connectivity;
further comprising a path prioritization component configured for determining the path based on a resource_allocation_updatedness metric, indicating the time interval from the latest moment resources have been allocated to the node, and a random path parameter selection.

2. The SDN controller of claim 1, further comprising at least one memory configured for store programmable instructions and at least one processor configured to execute the programmable instructions.

3. The SDN controller of claim 2, wherein the each of at least one microservice executes in at least one virtual machine or in at least one software container.

4. The SDN controller of claim 3, wherein the plurality of microservices are hosted in a single server or distributed throughout a plurality of servers.

5. The SDN controller of claim 4, further comprising
at least one general remote procedure call, gRPC, microservice configured for interacting with the other microservices using at least one gRPC interface microservice and at least one protocol buffer m icroservice;
or at least one HTTP microservice configured for communicating and translating requests to internal protocol buffers;
or at least one database microservice configured for storing network element topology information, status information, configuration information, connectivity services information, and connections information.

6. The SDN controller of claim 4, the plurality of microservices further comprising:
at least one context microservice (125) configured for providing the context, comprising at least one of topological, connectivity or connection information;
or at least one VNTM microservice (122) configured for creating at least one connection aimed at completing a path;
or at least one connection microservice (124) configured for interacting with at least one network element controller;
or at least one topology microservice (126) configured for registering network element controllers, retrieving their topologies and maintaining an overall topological view.

7. The SDN controller of claim 4, further configured for triggering a create (210) connectivity service comprising multiple interfaces for the life cycle management of connectivity service requests.

8. The SDN controller of claim 4, further configured for triggering a delete (260) connectivity request comprising a reference to a specific connectivity service.

9. The SDN controller of claim 4, wherein the cloud orchestrator further comprises a horizontal pod autoscaler component configured for monitoring microservice resource usage and generating a new microservice replica upon reaching the resource upper limit.

10. The SDN controller of claim 4, wherein the cloud orchestrator further comprises a self-healing component configured for monitoring microservice functioning and deleting a malfunctioning microservice and deploying a new microservice replica.

11. A system for network control and management, the system comprising at least one microservices software-defined network, SDN, controller (120) according to any of claims 1 to 10, configured for acting upon at least one SDN network comprising at least one network element upon reception of at least one request from at least one SDN client (115), such as an OSS or BSS.

12. A method for network control and management by a microservices software-defined network, SDN, controller (120), the SDN controller comprising a plurality of microservices, the method comprising:
executing, by at least one cloud orchestrator (129) of the SDN controller, each of at least one microservice of the plurality of microservices in an independent container enabling coordinating with at least one connectivity microservice (123) of the SDN controller and at least one path computation microservice (128) of the SDN controller for determining at least one feasible path and for provisioning at least one feasible connectivity, further comprising determining, in a path prioritization component, the path based on a resource_allocation_updatedness metric, indicating the time interval from the latest moment resources have been allocated to the node, and a random path parameter selection.

13. The method of claim 12, wherein the each of at least one microservice executes in at least one virtual machine or in at least one software container, and wherein the plurality of microservices are hosted in a single server or distributed throughout a plurality of servers.

14. The method of claim 13, further comprising:
interacting with the other microservices using at least one gRPC interface microservice and at least one protocol buffer microservice;
or communicating and translating requests to internal protocol buffers;
or storing network element topology information, status information, configuration information, connectivity services information, and connections information;
or providing the context, comprising at least one of topological, connectivity or connection information by at least one context m icroservice;
or creating at least one connection aimed at completing a path by at least one VNTM microservice;
or interacting with at least one network element controller by at least one connection microservice;
or registering network element controllers, retrieving their topologies and maintaining an overall topological view, by at least one topology m icroservice;
or triggering a create connectivity service comprising connectivity end points, requested capacity and optional constraint such as layer selection, node/link constraints;
or triggering a delete connectivity service comprising a connectivity service identifier;
or monitoring microservice resource usage and generating (210) a new microservice replica upon reaching the resource upper limit;
or monitoring microservice functioning and deleting (260) a malfunctioning microservice and deploying a new microservice replica.

15. A computer program comprising instructions, once executed on a processor, for performing the method steps of any one of claims 12 to 14.

16. A computer readable medium comprising instructions, once executed on a processor, for performing the method steps of any one of claims 12 to 14.

## Patentansprüche

1. Steuereinheit (120) für ein softwaredefiniertes Netzwerk, SDN, für Mikrodienste zur Netzwerksteuerung und -verwaltung, wobei die SDN-Steuereinheit eine Vielzahl von Mikrodiensten umfasst, umfassend:
mindestens einen Cloud-Orchestrator (129);
mindestens einen Konnektivitäts-Mikrodienst (123), der zum Verwalten des Lebenszyklus einer Konnektivitätsanforderung konfiguriert ist; und
mindestens einen Pfadberechnungs-Mikrodienst (128), der zum Verarbeiten von Pfadberechnungsanforderungen konfiguriert ist, umfassend das Empfangen von Pfadberechnungsanforderungen, das Berechnen mindestens eines möglichen Pfads und das Übertragen einer Antwort, die den mindestens einen möglichen Pfad umfasst;
wobei der mindestens eine Cloud-Orchestrator zum Ausführen jedes von mindestens einem Mikrodienst der Vielzahl von Mikrodiensten in einem unabhängigen Container konfiguriert ist, der ein Koordinieren mit dem mindestens einen Konnektivitäts-Mikrodienst und dem mindestens einen Pfadberechnungs-Mikrodienst zum Bestimmen mindestens eines möglichen Pfads und zum Bereitstellen mindestens einer möglichen Konnektivität ermöglicht;
ferner umfassend eine Pfadpriorisierungskomponente, die zum Bestimmen des Pfads auf Basis einer resource_allocation_updatedness-Metrik konfiguriert ist, die das Zeitintervall seit dem letzten Moment angibt, zu dem Ressourcen dem Knoten zugewiesen wurden, und eine zufällige Pfadparameterauswahl.

2. SDN-Steuereinheit nach Anspruch 1, ferner umfassend mindestens einen Speicher, der zum Speichern programmierbarer Anweisungen konfiguriert ist, und mindestens einen Prozessor, der konfiguriert ist, um die programmierbaren Anweisungen auszuführen.

3. SDN-Steuereinheit nach Anspruch 2, wobei jeder von mindestens einem Mikrodienst in mindestens einer virtuellen Maschine oder in mindestens einem Software-Container ausgeführt wird.

4. SDN-Steuereinheit nach Anspruch 3, wobei die Vielzahl von Mikrodiensten in einem einzelnen Server gehostet oder über eine Vielzahl von Servern verteilt werden.

5. SDN-Steuereinheit nach Anspruch 4, ferner umfassend
mindestens einen Allgemeinen-Remote-Procedure-Call, gRPC, Mikrodienst, der zum Interagieren mit den anderen Mikrodiensten unter Verwendung mindestens eines gRPC-Schnittstellen-Mikrodienstes und mindestens eines Protokollpuffer-Mikrodienstes konfiguriert ist;
oder mindestens einen HTTP-Mikrodienst, der zum Kommunizieren und Übersetzen von Anforderungen an interne Protokollpuffer konfiguriert ist;
oder mindestens einen Datenbank-Mikrodienst, der zum Speichern von Netzwerkelement-Topologieinformationen, Statusinformationen, Konfigurationsinformationen, Konnektivitätsdienstinformationen und Verbindungsinformationen konfiguriert ist.

6. SDN-Steuereinheit nach Anspruch 4, wobei die Vielzahl von Mikrodiensten ferner umfasst:
mindestens einen Kontext-Mikrodienst (125), der zum Bereitstellen des Kontexts konfiguriert ist, der mindestens eine von topologischen, Konnektivitäts- oder Verbindungsinformationen umfasst;
oder mindestens einen VNTM-Mikrodienst (122), der zum Erstellen mindestens einer Verbindung konfiguriert ist, die auf das Vervollständigen eines Pfads abzielt;
oder mindestens einen Verbindungs-Mikrodienst (124), der zum Interagieren mit mindestens einer Netzwerkelement-Steuereinheit konfiguriert ist;
oder mindestens einen Topologie-Mikrodienst (126), der zum Registrieren von Netzwerkelement-Steuereinheiten, Abrufen ihrer Topologien und Aufrechterhalten einer topologischen Gesamtansicht konfiguriert ist.

7. SDN-Steuereinheit nach Anspruch 4, die ferner zum Auslösen eines Konnektivitätserstellungsdienstes (210) konfiguriert ist, der mehrere Schnittstellen für die Lebenszyklusverwaltung von Konnektivitätsdienstanforderungen umfasst.

8. SDN-Steuereinheit nach Anspruch 4, die ferner zum Auslösen einer Konnektivitätslöschanforderung (260) konfiguriert ist, die einen Verweis auf einen spezifischen Konnektivitätsdienst umfasst.

9. SDN-Steuereinheit nach Anspruch 4, wobei der Cloud-Orchestrator ferner eine Horizontal-Pod-Autoscaler-Komponente umfasst, die zum Überwachen der Mikrodienst-Ressourcennutzung und zum Erzeugen einer neuen Mikrodienst-Replik bei Erreichen der Ressourcenobergrenze konfiguriert ist.

10. SDN-Steuereinheit nach Anspruch 4, wobei der Cloud-Orchestrator ferner eine selbstheilende Komponente umfasst, die zum Überwachen der Mikrodienstfunktion und zum Löschen eines fehlerhaft funktionierenden Mikrodienstes und zum Bereitstellen einer neuen Mikrodienst-Replik konfiguriert ist.

11. System zur Netzwerksteuerung und -verwaltung, wobei das System mindestens eine Steuereinheit (120) für ein softwaredefiniertes Netzwerk, SDN, für Mikrodienste nach einem der Ansprüche 1 bis 10 umfasst, das zum Einwirken auf mindestens ein SDN-Netzwerk konfiguriert ist, das bei Empfang von mindestens einer Anforderung von mindestens einem SDN-Client (115) mindestens ein Netzwerkelement umfasst, wie beispielsweise ein OSS oder BSS.

12. Verfahren zur Netzwerksteuerung und -verwaltung durch eine Steuereinheit (120) für ein softwaredefiniertes Netzwerk, SDN, für Mikrodienste, wobei die SDN-Steuereinheit eine Vielzahl von Mikrodiensten umfasst, wobei das Verfahren umfasst:
Ausführen, durch mindestens einen Cloud-Orchestrator (129) der SDN-Steuereinheit, von jedem von mindestens einem Mikrodienst der Vielzahl von Mikrodiensten in einem unabhängigen Container, der das Koordinieren mit mindestens einem Konnektivitäts-Mikrodienst (123) der SDN-Steuereinheit und mindestens einem Pfadberechnungs-Mikrodienst (128) der SDN-Steuereinheit zum Bestimmen mindestens eines möglichen Pfads und zum Bereitstellen mindestens einer möglichen Konnektivität ermöglicht, ferner umfassend das Bestimmen des Pfads in einer Pfadpriorisierungskomponente auf Basis einer resource_allocation_updatedness-Metrik, die das Zeitintervall seit dem letzten Moment angibt, zu dem Ressourcen dem Knoten zugewiesen wurden, und eine zufällige Pfadparameterauswahl.

13. Verfahren nach Anspruch 12, wobei jeder von mindestens einem Mikrodienst in mindestens einer virtuellen Maschine oder in mindestens einem Software-Container ausgeführt wird und wobei die Vielzahl von Mikrodiensten in einem einzelnen Server gehostet oder über eine Vielzahl von Servern verteilt wird.

14. Verfahren nach Anspruch 13, ferner umfassend:
Interagieren mit den anderen Mikrodiensten unter Verwendung mindestens eines gRPC-Schnittstellen-Mikrodienstes und mindestens eines Protokollpuffer-Mikrodienstes;
oder Kommunizieren und Übersetzen von Anforderungen an interne Protokollpuffer;
oder Speichern von Netzwerkelement-Topologieinformationen, Statusinformationen, Konfigurationsinformationen, Konnektivitätsdienstinformationen und Verbindungsinformationen;
oder Bereitstellen des Kontexts, der mindestens eine von topologischen, Konnektivitäts- oder Verbindungsinformationen umfasst, durch mindestens einen Kontext-Mikrodienst;
oder Erstellen von mindestens einer Verbindung, die auf das Vervollständigen eines Pfads abzielt, durch mindestens einen VNTM-Mikrodienst;
oder Interagieren mit mindestens einer Netzwerkelement-Steuereinheit durch mindestens einen Verbindungs-Mikrodienst;
oder Registrieren von Netzwerkelement-Steuereinheiten, Abrufen ihrer Topologien und Aufrechterhalten einer topologischen Gesamtansicht durch mindestens einen Topologie-Mikrodienst;
oder Auslösen eines Konnektivitätserstellungsdienstes, der Konnektivitätsendpunkte, angeforderte Kapazität und optionale Beschränkungen wie Schichtauswahl, Knoten-/Verbindungsbeschränkungen umfasst;
oder Auslösen eines Konnektivitätslöschdienstes, der eine Konnektivitätsdienstkennung umfasst;
oder Überwachen der Mikrodienst-Ressourcennutzung und Erzeugen (210) einer neuen Mikrodienst-Replik bei Erreichen der Ressourcenobergrenze;
oder Überwachen der Mikrodienstfunktion und Löschen (260) eines fehlerhaft funktionierenden Mikrodienstes und Bereitstellen einer neuen Mikrodienst-Replik.

15. Computerprogramm, umfassend Anweisungen zum Durchführen der Verfahrensschritte nach einem der Ansprüche 12 bis 14, sobald sie auf einem Prozessor ausgeführt werden.

16. Computerlesbares Medium, umfassend Anweisungen zum Durchführen der Verfahrensschritte nach einem der Ansprüche 12 bis 14, sobald sie auf einem Prozessor ausgeführt werden.

## Revendications

1. Contrôleur de réseau défini par logiciel, SDN, de microservices (120) pour le contrôle et la gestion de réseau, le contrôleur SDN comprenant une pluralité de microservices comprenant :
au moins un orchestrateur en nuage (129) ;
au moins un microservice de connectivité (123) configuré pour gérer le cycle de vie d'une demande de connectivité ; et
au moins un microservice de calcul de chemin (128) configuré pour traiter des demandes de calcul de chemin comprenant la réception de demandes de calcul de chemin, le calcul d'au moins un chemin réalisable et la transmission d'une réponse comprenant le au moins un chemin réalisable ;
dans lequel le au moins un orchestrateur en nuage est configuré pour exécuter chacun d'au moins un microservice de la pluralité de microservices dans un conteneur indépendant permettant la coordination avec le au moins un microservice de connectivité et le au moins un microservice de calcul de chemin pour déterminer au moins un chemin réalisable et pour fournir au moins une connectivité réalisable ;
comprenant en outre un composant de priorisation de chemin configuré pour déterminer le chemin sur la base d'une métrique resource_allocation_updatedness, indiquant l'intervalle de temps depuis le dernier moment où les ressources ont été allouées au noeud et d'une sélection de paramètre de chemin aléatoire.

2. Contrôleur SDN selon la revendication 1, comprenant en outre au moins une mémoire configurée pour stocker des instructions programmables et au moins un processeur configuré pour exécuter les instructions programmables.

3. Contrôleur SDN selon la revendication 2, dans lequel chacun d'au moins un microservice s'exécute dans au moins une machine virtuelle ou dans au moins un conteneur logiciel.

4. Contrôleur SDN selon la revendication 3, dans lequel la pluralité de microservices est hébergée dans un seul serveur ou distribuée sur une pluralité de serveurs.

5. Contrôleur SDN selon la revendication 4, comprenant en outre
au moins un microservice d'appel de procédure distant général, gRPC, configuré pour interagir avec les autres microservices en utilisant au moins un microservice d'interface gRPC et au moins un microservice de tampon de protocole ;
ou au moins un microservice HTTP configuré pour communiquer et traduire les demandes vers les tampons de protocole internes ;
ou au moins un microservice de base de données configuré pour stocker des informations de topologie d'élément de réseau, des informations d'état, des informations de configuration, des informations de services de connectivité et des informations de connexions.

6. Contrôleur SDN selon la revendication 4, la pluralité de microservices comprenant en outre :
au moins un microservice de contexte (125) configuré pour fournir le contexte, comprenant au moins l'une des informations topologiques, de connectivité ou de connexion ;
ou au moins un microservice VNTM (122) configuré pour créer au moins une connexion visant à achever un chemin ;
ou au moins un microservice de connexion (124) configuré pour interagir avec au moins un contrôleur d'élément de réseau ;
ou au moins un microservice de topologie (126) configuré pour enregistrer des contrôleurs d'éléments de réseau, récupérer leurs topologies et maintenir une vue topologique globale.

7. Contrôleur SDN selon la revendication 4, configuré en outre pour déclencher un service de connectivité de création (210) comprenant plusieurs interfaces pour la gestion du cycle de vie des demandes de service de connectivité.

8. Contrôleur SDN selon la revendication 4, configuré en outre pour déclencher une demande de connectivité de suppression (260) comprenant une référence à un service de connectivité spécifique.

9. Contrôleur SDN selon la revendication 4, dans lequel l'orchestrateur en nuage comprend en outre un composant de mise à l'échelle automatique de capsule horizontale configuré pour surveiller l'utilisation des ressources de microservice et générer une nouvelle réplique de microservice lors de l'atteinte de la limite supérieure de ressource.

10. Contrôleur SDN selon la revendication 4, dans lequel l'orchestrateur en nuage comprend en outre un composant d'auto-réparation configuré pour surveiller le fonctionnement du microservice et supprimer un microservice défectueux et déployer une nouvelle réplique de m icroservice.

11. Système de contrôle et de gestion de réseau, le système comprenant au moins un contrôleur de réseau défini par logiciel, SDN, de microservices (120) selon l'une quelconque des revendications 1 à 10, configuré pour agir sur au moins un réseau SDN comprenant au moins un élément de réseau à réception d'au moins une demande d'au moins un client SDN (115), tel qu'un OSS ou un BSS.

12. Procédé de contrôle et de gestion de réseau par un contrôleur de réseau défini par logiciel, SDN, de microservices (120), le contrôleur SDN comprenant une pluralité de microservices, le procédé comprenant :
l'exécution, par au moins un orchestrateur en nuage (129) du contrôleur SDN, de chacun d'au moins un microservice de la pluralité de microservices dans un conteneur indépendant permettant la coordination avec au moins un microservice de connectivité (123) du contrôleur SDN et au moins un microservice de calcul de chemin (128) du contrôleur SDN pour déterminer au moins un chemin réalisable et pour fournir au moins une connectivité réalisable, comprenant en outre la détermination, dans un composant de priorisation de chemin, du chemin sur la base d'une métrique resource_allocation_updatedness, indiquant l'intervalle de temps à partir du dernier moment où les ressources ont été allouées au noeud et d'une sélection de paramètre de chemin aléatoire.

13. Procédé selon la revendication 12, dans lequel chacun d'au moins un microservice s'exécute dans au moins une machine virtuelle ou dans au moins un conteneur logiciel et dans lequel la pluralité de microservices est hébergée dans un seul serveur ou distribuée sur une pluralité de serveurs.

14. Procédé selon la revendication 13, comprenant en outre :
l'interaction avec les autres microservices en utilisant au moins un microservice d'interface gRPC et au moins un microservice de tampon de protocole ;
ou la communication et la traduction des demandes vers des tampons de protocole internes ;
ou le stockage d'informations de topologie d'élément de réseau, d'informations d'état, d'informations de configuration, d'informations de services de connectivité et d'informations de connexions ;
ou la fourniture du contexte, comprenant au moins une des informations topologiques, de connectivité ou de connexion par au moins un microservice de contexte ;
ou la création d'au moins une connexion visant à achever un chemin par au moins un microservice VNTM ;
ou l'interaction avec au moins un contrôleur d'élément de réseau par au moins un microservice de connexion ;
ou l'enregistrement de contrôleurs d'éléments de réseau, la récupération de leurs topologies et le maintien d'une vue topologique globale, par au moins un microservice de topologie ;
ou le déclenchement d'un service de connectivité de création comprenant des points d'extrémité de connectivité, une capacité demandée et une contrainte facultative telle que la sélection de couche, des contraintes noeud/liaison ;
ou le déclenchement d'un service de connectivité de suppression comprenant un identifiant de service de connectivité ;
ou la surveillance de l'utilisation des ressources de microservice et la génération (210) d'une nouvelle réplique de microservice lors de l'atteinte de la limite supérieure de ressource ;
ou la surveillance du fonctionnement du microservice et la suppression (260) d'un microservice défectueux et le déploiement d'une nouvelle réplique de microservice.

15. Programme informatique comprenant des instructions, une fois exécutées sur un processeur, pour exécuter les étapes du procédé selon l'une quelconque des revendications 12 à 14.

16. Support lisible par ordinateur comprenant des instructions, une fois exécutées sur un processeur, pour exécuter les étapes du procédé selon l'une quelconque des revendications 12 à 14.
